# EUROPEAN PATENT APPLICATION

(11) **EP 1 467 238 A1**
(43) Date of publication of application: **13.10.2004**
(21) Application number: 03008353.9
(22) Date of filing: 10.04.2003
(51) Int. Cl.: G02B 27/14, G02F 1/1335, H04N 9/31, G02B 6/00

(54) **Illumination Arrangement**

(71) Applicant: Sony International (Europe) GmbH, 10785 Berlin (DE)
(72) Inventor: Teijido, Juan Manuel, Stuttgart Technology Center, Hedelfinger Strasse 61, 70327 Stuttgart (DE); Ludley, Frederic, Stuttgart Technology Center, Hedelfinger Strasse 61, 70327 Stuttgart (DE)
(74) Representative: Müller - Hoffmann & Partner

(57) **Abstract**

An illumination arrangement (40, 60, 100) comprisies at least two light sources (41-43, 61-63) for generating first light beams, respectively, a light mixing device (44, 64, 65) for inputting said first light beams and combining them to a single second light beam, and a pyramidal light pipe (47, 66) which inputs said second light beam and outputs a third light beam.

## Description

The invention relates to an illumination arrangement.

In recent years, a lot of efforts have been done to provide illumination arrangements allowing an uniform illumination of a surface (e. g. a µ-display) showing a high compactness.

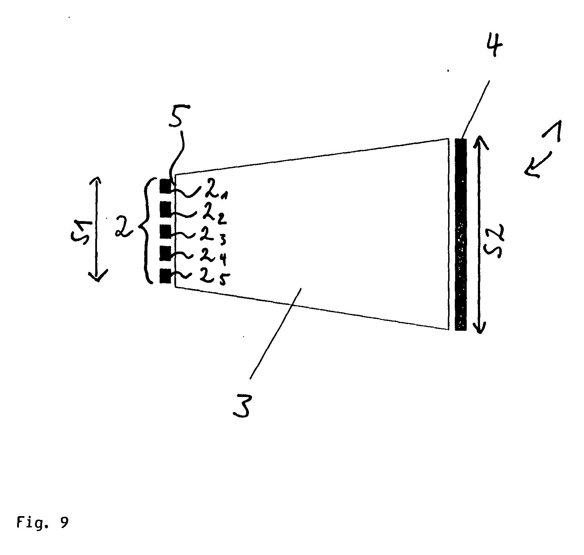

Document EP 02 024 962 for example discloses several illumination arrangements showing a high compactness. An example of such an illumination arrangement will be explained in detail while making reference to Fig. 9. An illumination arrangement 1 comprises a polychromatic light source array 2, a pyramidal light pipe 3, and a target surface 4 to be illuminated. The polychromatic light source array 2 comprises a first to fifth light source 2₁ to 2₅ which preferably emit light of different colors, respectively. The light pipe 3 fulfills the following functions: Collection and collimation of the light being emitted from the polychromatic light source array 2 and homogenization of the illumination of the target surface 4. Thus, a polychromatic, uniform and collimated illumination of the target surface 4 can be achieved.

The advantage of the pyramidal light pipe 3 is that the dimensions of an overall light emitting surface of said polychromatic light source array 2 (which is indicated by the parameter S1, the area of said surface) is sufficient for illuminating the relatively large target surface 4 (which dimensions are indicated by the parameter S2, the area of said surface 4). However, there is the problem that the size of an input surface 5 of the light pipe 3 limits S1 and therefore limits the maximal number of light sources of 2₁ to 2₅. As a consequence, the brightness of the light source array 2 and thus the brightness of the light illuminating the target surface 4 is limited.

It is therefore an object of the present invention to provide an illumination arrangement which shows a high compactness, and which at the same time shows an increased illumination of the target surface.

To solve this problem, the invention provides illumination arrangements according to claims 1 and 13. Preferably embodiments of said illumination arrangements are defined in respective subclaims.

According to the present invention, an illumination arrangement according to a first solution of the object comprises at least two light sources for generating first light beams, respectively, a light mixing device for inputting said first light beams and combining them to a single second light beam, and a pyramidal light pipe which inputs the second light beam and outputs a third light beam. The third light beam is the desired output light beam which illuminates the target surface (which may for example be a "µ-display").

Preferably, three light sources are used, each of them generating a first light beam of one of the colors green, red, and blue, respectively. However, also other colors may be used. Further, more than three light sources may be used.

In a preferred embodiment, the light mixing device is a color cube which shows at least two input surfaces for inputting one of the first light beams, respectively, and one output surface for outputting the second light beam. Alternatively, the light mixing device is constituted by a dichroic filter or a combination of dichroic filters. Each of the dichroic filters shows at least one input surface for inputting one of the first light beams, respectively, and one output surface. The combination of dichroic filters may, for example, comprise a first and a second dichroic filter, wherein the first dichroic filter shows two input surfaces for inputting two of the first light beams, and one output surface for outputting a first combined light beam, wherein the second dichroic filter comprises one input surface for inputting one of the first light beams, one input surface for inputting the first combined light beam, and one output surface for outputting a second combined light beam which is the single second light beam mentioned above.

The terms "combining/combine" in the expressions "combining the first light beams to a single second light beam" and "a first combined light beam" and "a second combined light beam" may mean superposition of light beams of a common cross-section, or a light beam which alternately consists of different single light beams over the time (i. e. no superposition, known as "sequential coloring").

Advantageously, the length and the width of output surfaces of the light sources are substantially equal to that of respective input surfaces of the color cube/the respective input surface of the dichroic filters. Thus, an optimum of light power is inputted into an input surface of the light pipe. However, the length and width of output surfaces may also be smaller than the input surfaces of the color cube/dichroic filters. Preferably, the length and the width of an output surface of the color cube/dichroic filter which outputs the second light beam is substantially equal to the length and the width of an input surface of the pyramidal light pipe which inputs the second light beam.

Between the light sources and the light mixing device and/or between the light mixing device and the pyramidal light pipe air gaps may be provided, respectively, in order to improve light collection.

Between each light source and the corresponding input surfaces of the color cube/dichroic filters additional pyramidal light pipes may be located. This enables a great flexibility as far as the dimensions of the light mixing device are concerned. Preferably, in this embodiment, the lengths and the widths of the output surfaces of the light sources are substantially equal to the lengths and the widths of input surfaces of the additional pyramidal light pipes, and the lengths and the widths of output surfaces of the additional pyramidal light pipes are substantially equal to the respective input surfaces of the color cube/dichroic filters. The output surfaces of the light sources may, however, also be smaller than the input surfaces of the color cube/dichroic filters. To increase light collection, the additional pyramidal light pipes and the light sources are in direct mechanical contact with each other. To further improve light collection, between the additional pyramidal light pipes and the light mixing device air gaps are provided.

As has become apparent, an important aspect of the inventive illumination arrangement described above is that the use of a light mixing device makes it possible to increase the output surfaces of the light sources without increasing the input surface of the pyramidal light pipe. As a consequence, the brightness of a target service to be illuminated by the illumination arrangement can be increased while at the same time the dimensions of the illumination arrangement are increased only very slightly.

According to a second solution of the object, the present invention further provides an illumination arrangement comprising at least two light sources for generating first light beams, respectively, a light mixing device for inputting the first light beams and combining them to a single output light beam, and at least two pyramidal light pipes which are located between a light source and the light mixing device, respectively.

Preferably, input surfaces of the pyramidal light pipes and the corresponding light sources are in direct mechanical contact with each other. Further, between the pyramidal light pipes and the mixing device air gaps may be provided.

This embodiment also shows above mentioned advantages of a high compactness and an increased brightness of an output light beam. An additional advantage of this embodiment is that the mixing device shows larger dimensions compared to that of the first embodiment. As a consequence, the light mixing device of this embodiment is easier to manufacture.

The color cube and/or the dichroic filters preferably comprise at least two glass prisms, respectively.

Advantageously, but not necessarily, between two of the glass prisms of a color cube/dichroic filter a glass plate is provided, respectively which is coated by a transmissive/reflective film, wherein the surface dimensions of the glass plate are bigger than the surface dimensions of surfaces of the prisms sandwiching the glass plate.

Further features and embodiments of the present invention will be described in the following description while making reference to the accompanying drawings, wherein:
- Fig. 1: shows a first embodiment of an illumination arrangement according to the present invention;
- Fig. 2: shows a second embodiment of an illumination arrangement according to the present invention;
- Fig. 3: shows a third embodiment of an illumination arrangement according to the present invention;
- Fig. 4: shows a fourth embodiment of an illumination arrangement according to the present invention;
- Fig. 5: shows an enlargement of the configuration of the light sources, the light mixing device and the light pipe of the embodiment shown in Fig. 1;
- Fig. 6: shows an alternative configuration of the light sources, the light mixing device and the light pipe of the embodiment shown in Fig. 1;
- Fig. 7: shows an enlargement of a configuration of light source and light pipe used in the embodiments of Figs. 3 and 4;
- Fig. 8: shows an enlargement of an alternative configuration of a light source and a corresponding light pipe used in the embodiments of Figs. 3 and 4;
- Fig. 9: shows a known illumination arrangement;
- Fig. 10: shows a first embodiment of a combination of dichroic filters;
- Fig. 11: shows a second embodiment of a combination of dichroic filters;
- Fig. 12: shows a third embodiment of a combination of dichroic filters;
- Fig. 13: shows an embodiment of a color cube;
- Fig. 14: shows the principle of total internal reflection;
- Fig. 15: illustrates a method for coating prisms.
- Fig. 16: shows an alternative method for coating prisms according to the present invention.

In the following description, some general remarks about dichroic filters and color cubes will be given.

Color combination can either be achieved by using a combination of dichroic filters or by using a color cube.

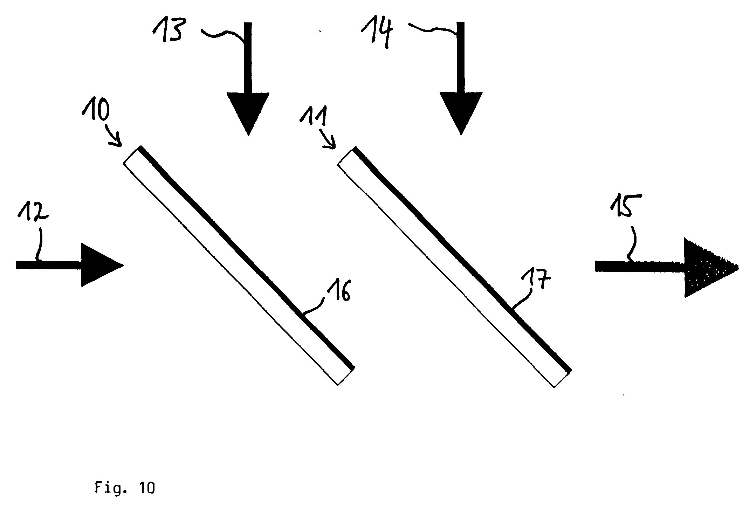

Fig. 10 shows a combination of a first dichroic filter 10 and a second dichroic filter 11. The two dichroic filters 10, 11 are realized as glass plates being coated by respective transmissive/reflective films 16, 17. Each dichroic filter reflects one single color (for example red or green) and transmits all other colors. In this example, the first dichroic filter 10 transmits a first color beam 12, having for example blue color and reflects a second color beam 13, of for example red color. The second dichroic filter 11 transmits the first color beam 12 and the reflected second color beam 13 and reflects a third color beam 14, of for example green color. Thus, a combined color beam 15 is generated.

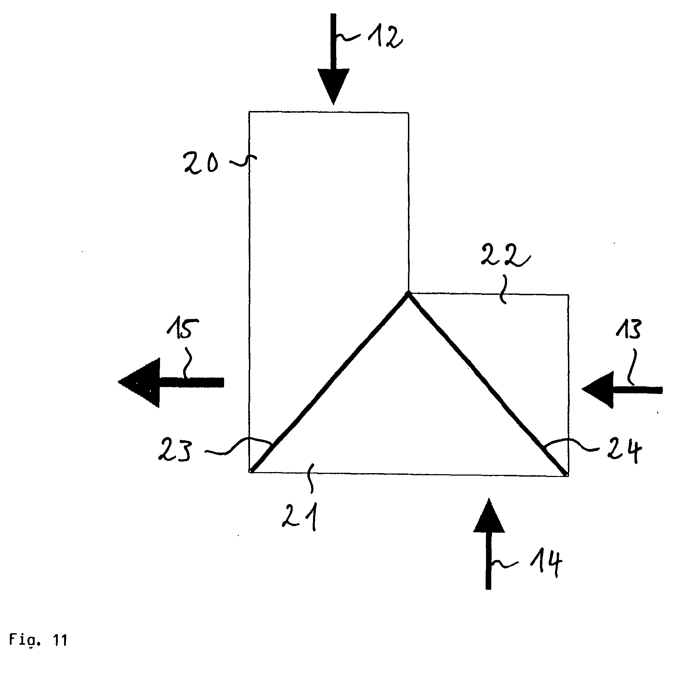

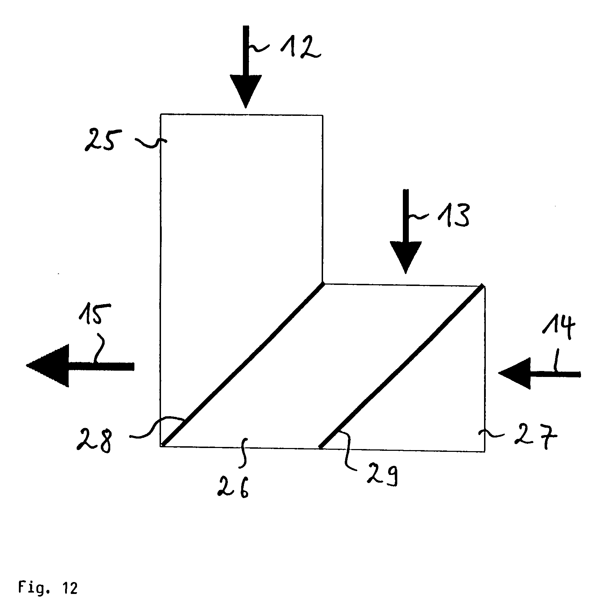

As can be taken from Figs. 11 and 12, combinations of dichroic filters can also be realized as combinations of coated prisms of for example glass. The combination of dichroic filters shown in Fig. 11 comprises a first to third prism 20 to 22. Between the first prism 20 and the second prism 21 a first reflective/transmissive film 23 is provided. Further, between the second prism 21 and the third 22 a second reflective/transmissive film 24 is provided. The first transmissive/reflective film 23 reflects the first color beam 12 of, for example, blue color. The second transmissive/reflective film 24 reflects the third color beam 14 of, for example, green color and transmits the second color beam 13 of, for example, red color. The reflected third color beam 14 and the transmitted second color beam 13 pass the first transmissive/reflective filter 23. As a consequence, a combined color beam 15 is generated.

Fig. 12 shows another example of a combination of dichroic filters being realized by coated prisms. In this combination, a first to third prism 25 to 27 are provided. Between the first prism 25 and the second prism 26 a first transmissive/reflective film 28 is provided. Between the second prism 26 and the third prism 27 a second transmissive/reflective film 29 is provided. Analogous to the embodiment shown in Fig. 11, the properties of the first and second transmissive/reflective films are chosen in a way that the color beams 12 to 14 are combined into a combined color beam 15.

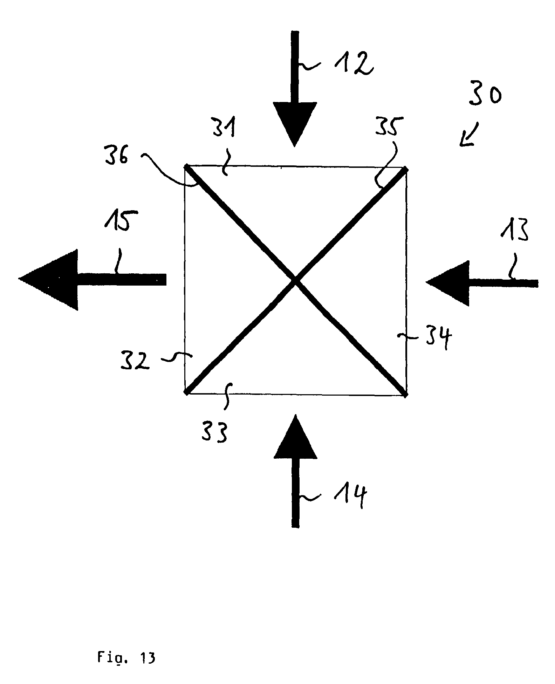

Fig. 13 shows an example of a color cube. A color cube 30 comprises a first to fourth prism 31 to 34. The prism surfaces forming the cube diagonals are coated in such a way that one color (for example, red or blue) is reflected, and all other colors are transmitted. Thus, a first transmissive/reflective film 35 and a second transmissive/reflective film 36 are provided. As a consequence, the color beams 12 to 14 are combined into a single combined color beam 15.

All examples of light mixing devices given above show possibilities to recombine different color beams into one single polychromatic output beam. It should be noted that these color combination schemes do not fulfill any function in order to homogenize the illumination produced by the output beam.

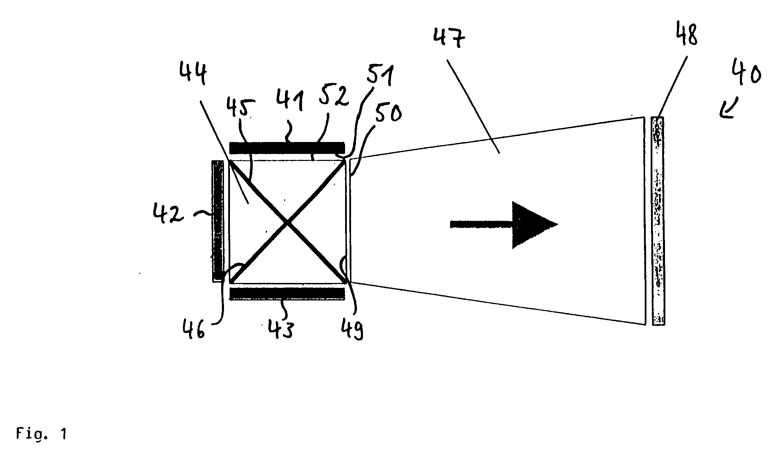

Making reference to Fig. 1, a first preferred embodiment of an illumination arrangement according to the present invention will be described. An illumination arrangement 40 comprises a first to third light source 41 to 43, a color cube 44 showing a first transmissive/reflective film 45 and a second transmissive/reflective film 46, a pyramidal light pipe 47, and a target surface 48 to be illuminated.

The function of the color cube 44 is to collect and multiplex different color beams generated by the light sources 41 to 43. For example, the first light source 41 produces a blue color beam being reflected by the first film 45, whereas the third light source 43 generates a second color beam of red color being reflected by the second film 46. The color beam of green color being generated by the second light source 42 passes both the first and the second film 45, 46. Thus, a combined single output beam passes through an output surface 49 of the color cube 44 and is coupled into the pyramidal light pipe 47 through an input surface 50 of the pyramidal light pipe 47. In this example, the lengths and the widths of output surfaces of the light sources 41 to 43 are equal to the lengths and the widths of respective input surfaces of the color cube 44 (for example the dimensions of an output surface 51 of the first light source 41 is equal to that of an input surface 52 of the color cube 44). However, the dimensions of the output surfaces of the light sources 41 to 43 may also be smaller than those of respective input surfaces of the color cube 44.

Compared to the embodiment shown in Fig. 9, the brightness of the color illumination of the surface 48 is remarkably higher since an overall output surface of the light sources 41 to 43 which emits light is three times higher than that in Fig. 9. The pyramidal light pipe is responsible for homogenization and collimation of the illumination.

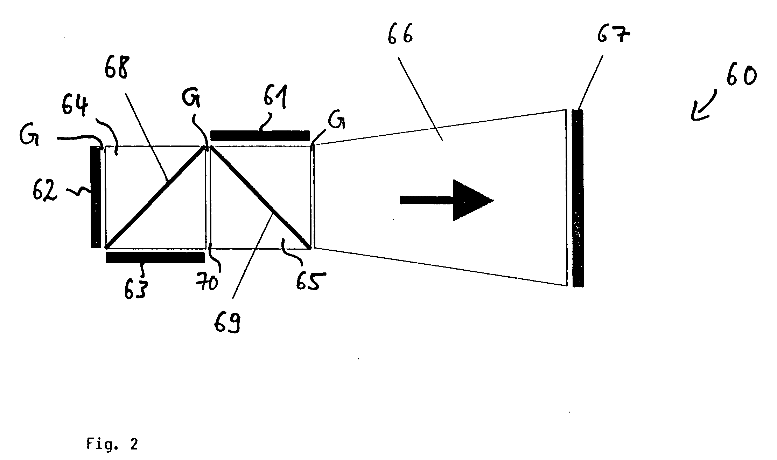

Making reference to Fig. 2, a second embodiment of an illumination arrangement according to the present invention will be described. In this embodiment, the color cube 44 of Fig. 1 is replaced by a combination of dichroic filters. An illumination arrangement 60 comprises a first to third light source 61 to 63, a first dichroic filter 64, a second dichroic filter 65, a pyramidal light pipe 66, and a surface 67 to be illuminated. The first and the second dichroic filter 64, 65 are realized as glass cubes having a first and a second transmissive/reflective film 68 and 69. The first film 68 combines light beams being generated from the second and third light source 62, 63 into a combined light beam which enters the second dichroic filter 65 via an input surface 70. The second dichroic filter 65 combines said combined light beam and a light beam being emitted from the first light source 61 by means of the second film 69 to generate a second combined light beam which enters the pyramidal light pipe 66. The embodiment of Fig. 2 is less compact than that of Fig. 1. However, the illumination arrangement of Fig. 2 is easier to manufacture, in particular for very compact dimensions.

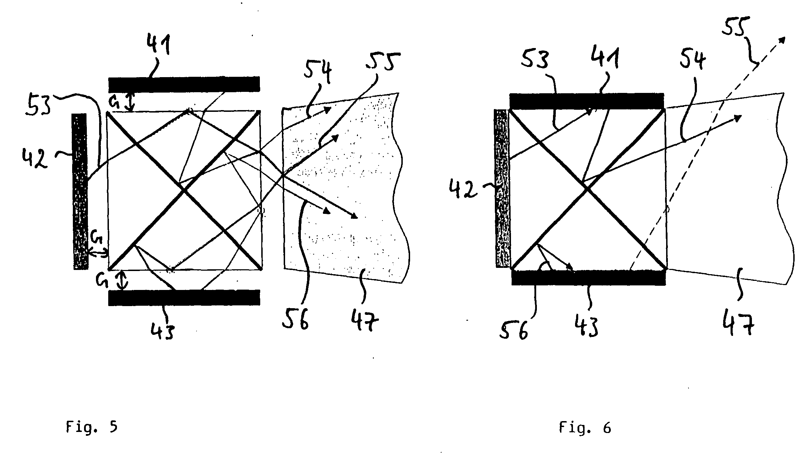

Preferably, in the embodiments of Fig. 1 and 2, air gaps G are provided between the light sources 41 to 43, 61 to 63, and the color cube 44/dichroic filters 64, 65. Preferably, air gaps are also provided between the color cube 44 and the pyramidal light pipe 47 as well as between the second dichroic filter 65 and the pyramidal light pipe 66 and between the first and the second dichroic filter 64, 65. The reason for this is explained in Figs. 5 and 6. As can be taken from Fig. 5, a first to fourth light ray 53 to 56 is generated by the light sources 41 to 43. Due to the air gaps G, all light rays 53 to 56 are reflected by total internal reflection (TIR) by the air gaps G and are thus coupled into the pyramidal light pipe 47.

Without such an air gap, only one of those light rays 53 to 56 would have been coupled into the pyramidal light pipe 47, namely light ray 54, as can be taken from Fig. 6. All other light rays are either absorbed by the light sources 41 to 43 or lost. That is, without air gaps G, the rays would either be absorbed or propagate in undesired directions producing optical losses. Some of the light rays (ray 54 in Fig. 6) are practically unaffected by the air gaps G. Optical losses is also the reason to employ glass cubes in Fig. 2 and not only glass plates 10, 11 as shown in Fig. 10. Such coated glass plates would let light rays escape in undesired directions producing optical losses.

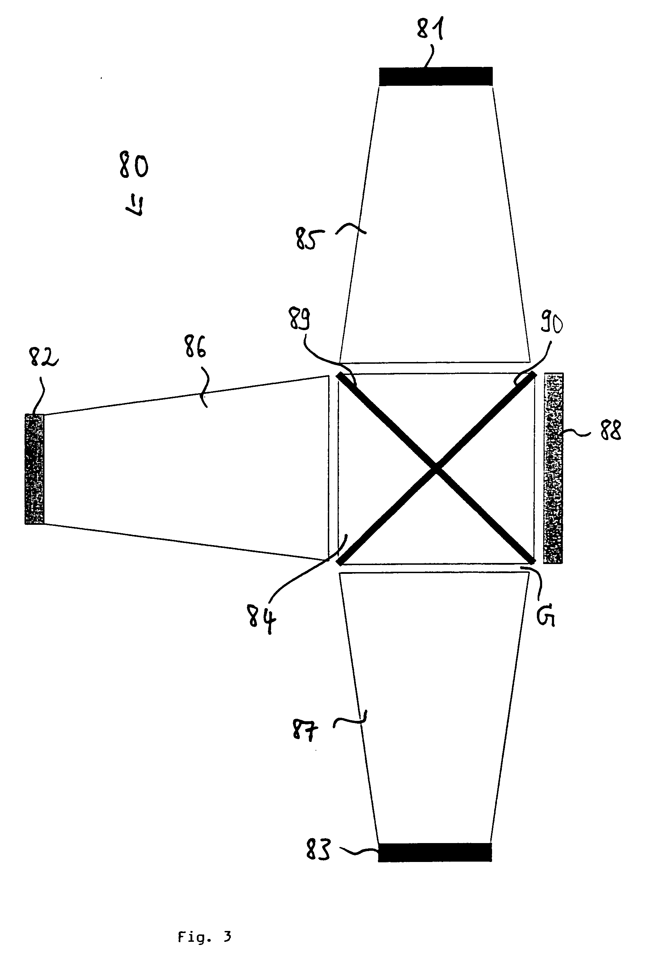

Making reference to Fig. 3, a third embodiment of an illumination arrangement according to the present invention will be described. An illumination arrangement 80 comprises a first to third light source 81 to 83, a color cube 84 showing a first transmissive/reflective film 89 and a second transmissive/reflective film 90, a first to third pyramidal light pipe 85 to 87 and a target surface 88 to be illuminated. Preferably, in this embodiment, the light pipes 85 to 87 and the respective light sources 81 to 83 are in direct mechanical contact with each other. This embodiment is easy to manifacture since the dimensions of the color cube 84 are relatively large. To give an example: The cube edge has a typical size of 2,0 mm to 4,00 mm in the configurations of Figs. 1 and 2, whereas the color cube has the dimensions of the µ-display (e. g. 0,7" diagonal) in the configuration of Figs. 3. However, the present invention is not restricted to these dimensions. Air gaps G are provided between the light pipes 85 to 87 and the color cube 84. Light beams being emitted by the light sources 81 to 83 is transported by the light pipes 85 to 87 to the color cube 84, respectively, which mixes the light beams by means of the films 89, 90 to generate a combined light beam which illuminates the target surface 88.

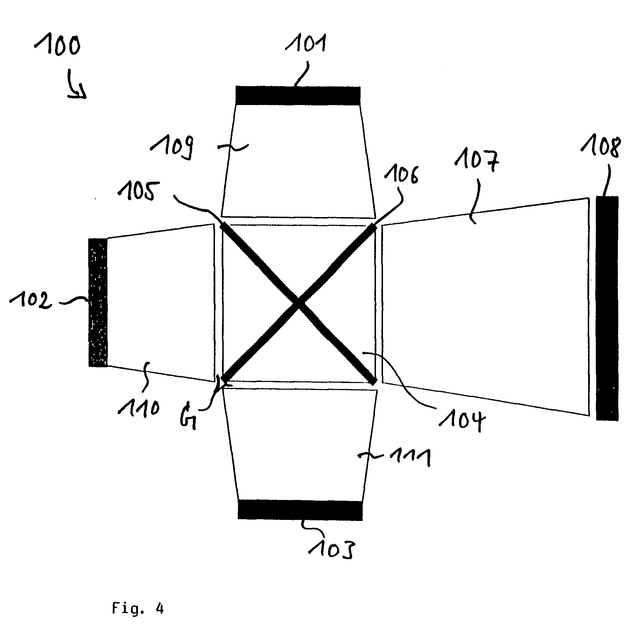

Making reference to Fig. 4, a fourth preferred embodiment of an illumination arrangement according to the present invention will be described. An illumination arrangement 100 comprises a first to third light source 101 to 103, a color cube 104 showing a first transmissive/reflective film 105 and a second transmissive/reflective film 106, a pyramidal light pipe 107, a target surface 108 to be illuminated, and a first to third additional pyramidal light pipe 109 to 111. This embodiment differs from that shown in Fig. 1 only by the additional pyramidal light pipes 109 to 111. Preferably, in this embodiment, the additional pyramidal light pipes 109 to 111 and the respective light sources 101 to 103 are in direct mechanical contact with each other. The embodiment shown in Fig. 4 is more compact than that of Fig. 3. It is not as compact as that of Fig. 1, but easier to manifacture. Air gaps G are provided between the light pipes 109 to 111 and the color cube 104 and between the color cube 104 and the pyramidal light pipe 107.

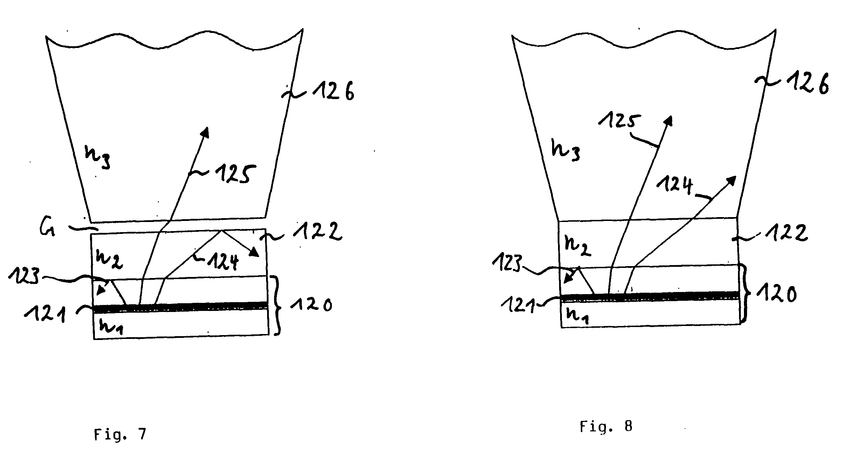

The color cube 44 and the dichroic filters 64, 65 are surrounded by air gaps G in order to minimize optical losses, as already explained. However, when the source is directly in front of the light pipe, as shown in Figs. 3 and 4, there is no need to include an air gap between the source and the light pipe. This will be explained while making reference to Figs. 7 and 8.

Actually, when using surface mounted LEDs, the light extraction efficiency of the light source is increased when the light pipe is in contact with the LED surface (see Fig. 7). This results in an significant increase of the overall optical efficiency.

In Figs. 7 and 8, a semiconductor active surface 121 of a semiconductor 120 is shown which emits light rays in random directions. Due to the high refractive index n₁ of the semiconductor 120 compared to the refractive index n₂ of an epoxy layer 122, part of the rays are trapped by total internal reflection (for example ray denoted by reference symbol 123). In the configuration of Fig. 8, the same happens for parts of the rays between the epoxy layer 122 and an air gap G (see totally reflected ray denoted by reference symbol 124). However, in the configuration shown in Fig. 7, where the epoxy layer 122 is in contact with a light pipe 126, all the rays leaving the epoxy layer 122 are coupled into the light pipe 126, as the refractive index of the epoxy layer 122, n₂ and the refractive index of the light pipe 126, n₃ preferably is chosen close to each other (close to index matching condition).

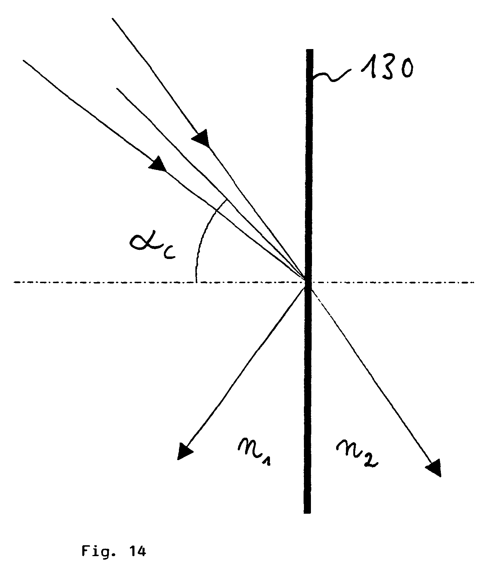

The principle of total internal reflection is shown in Fig. 14. For a ray in a high refractive index medium n₁ reaching an interface 130 with a lower refractive index medium n₂, if the angle of incidence α is bigger than the critical angle α_{c}, then the ray is totally internal reflected (TIR). Otherwise, the ray is refracted and propagates in the low refractive index medium. The critical angle is α_{c} = sin⁻¹ (n₂/n₁).

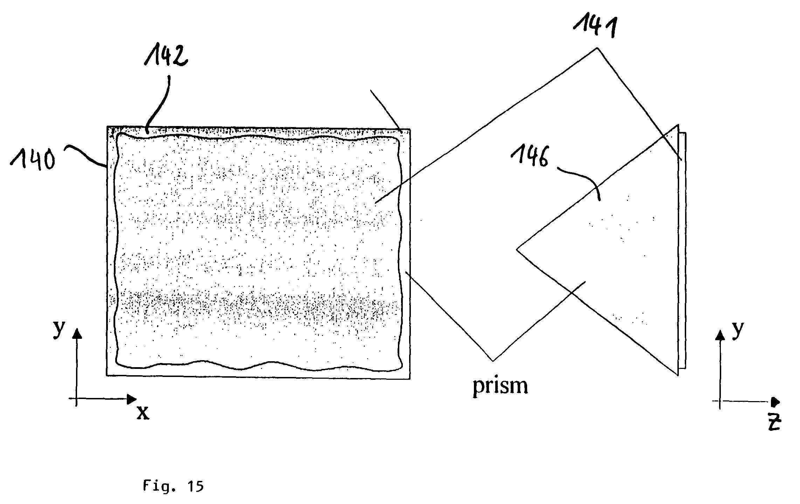

When using color or dichroic cubes for the illumination configurations proposed above, the full dichroic surface of the prisms/glass plates etc. is "used" (illuminated) by the light beams. In other words, the full surface should be coated by the corresponding dichroic films. In practice, however, it may be difficult to coat the surface close to the edges for several reasons (for example because the edges are already covered with undesired material). This situation is shown in Fig. 15: A prism surface 140 is coated by a transmissive/reflective (dichroic) film 141 as described above. Usually, an uncoated margin 142 is left because of restrictions in the manufacturing process. When the prism size is small, the uncoated margin represents a significant proportion of the prism surface 140. This results in optical losses as the color rays are not correctly redirected when falling on the uncoated margin 142.

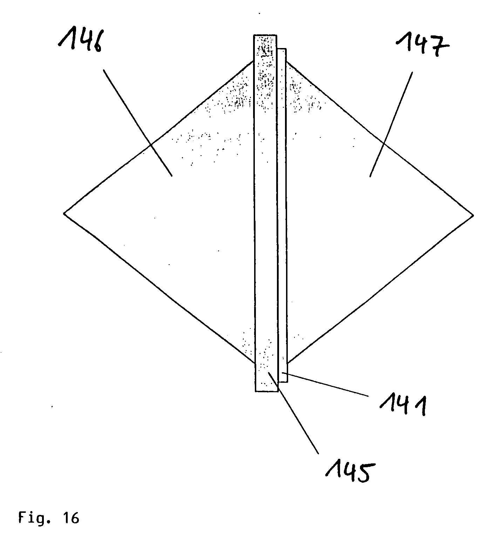

A way to turn around the uncoated margin problem is shown in Fig. 16. A thin glass plate 145 whose surface dimensions are bigger than the surface dimensions of a prism cross-section of two prisms 146, 147 is coated with said transmissive/reflective film 141 and then provided (glued) between the two prisms 146, 147 to get a dichroic filter on a glass prism basis. The uncoated margin 142 does then not lie within the prisms cross-section, thus the efficiency of the dichroic filter is optimized.

## Claims

1. Illumination arrangement (40, 60, 100), comprising:
- at least two light sources (41-43, 61-63) for generating first light beams, respectively,
- a light mixing device (44, 64, 65) for inputting said first light beams and combining them to a single second light beam, and
- a pyramidal light pipe (47, 66) which inputs said second light beam and outputs a third light beam.

2. Illumination arrangement (40, 60, 100) according to claim 1, wherein said illumination arrangement comprises three light sources (41-43), each of them generating a first light beam of one of the colors green, red and blue, respectively.

3. Illumination arrangement (40, 100) according to claim 1 or 2, wherein said light mixing device is a color cube (44) showing at least two input surfaces for inputting one of said first light beams, respectively, and one output surface for outputting said second light beam.

4. Illumination arrangement (60) according to claim 1 or 2, wherein said light mixing device is a dichroic filter (64, 65) or a combination of dichroic filters, each of said dichroic filters showing at least one input surface for inputting one of said first light beams, respectively, and one output surface.

5. Illumination arrangement (60) according to claim 4, wherein said combination of dichroic filters comprises a first and a second dichroic filter (64, 65), said first dichroic filter (64) showing two input surfaces for inputting two of said first light beams, and one output surface for outputting a first combined light beam, and said second dichroic filter (65) comprises one input surface for inputting one of said first light beams, one input surface for inputting said first combined light beam, and one output surface for outputting a second combined light beam.

6. Illumination arrangement (40, 60, 100) according to anyone of the claims 3 to 5, wherein the lengths and the widths of output surfaces of said light sources are substantially equal to that of a respective input surface of said color cube (44)/the length and width of a respective input surface of said dichroic filters (64, 65).

7. Illumination arrangement (40, 60, 100) according to claim 6, wherein the lengths and the widths of an output surface of said color cube (44)/dichroic filter (65) which outputs said second light beam is substantially equal to the length and the width of an input surface of said pyramidal light pipe (47, 66) which inputs said second light beam.

8. Illumination arrangement (40, 60, 100) according to anyone of the preceding claims, wherein between the light sources (41-43, 61-63) and the light mixing device (44, 64, 65) and/or between the light mixing device (44, 64, 65) and the pyramidal light pipe air gaps (G) are provided.

9. Illumination arrangement (40, 60, 100) according to anyone of the preceding claims, wherein between each light source (41-43, 61-63, 101-103) and the corresponding input surfaces of said color cube (44)/dichroic filters (64, 65) an additional pyramidal light pipe (109-111) is located.

10. Illumination arrangement (40, 60, 100) according to claim 9, wherein the lengths and the widths of said output surfaces of said light sources (41-43, 61-63, 101-103) are substantially equal to the lengths and the widths of input surfaces of said additional pyramidal light pipes (109-111), and the lengths and the widths of output surfaces of said additional pyramidal light pipes (109-111) are substantially equal to said input surfaces of said color cube (44)/dichroic filters (64, 65).

11. Illumination arrangement (40, 60, 100) according to claim 9 or 10, wherein said input surfaces of said additional pyramidal light pipes (109-111) and the light sources (101-103) are in direct mechanical contact with each other.

12. Illumination arrangement (40, 60, 100) according to anyone of the claims 9 to 11, wherein between said additional pyramidal light pipes (109-111) and the light mixing device air gaps (G) are provided.

13. Illumination arrangement (80), comprising:
- at least two light sources (81-83) for generating first light beams, respectively,
- a light mixing device (84) for inputting said first light beams and combining them to a single output light beam,
wherein between each light source (81-83) and the light mixing device (84) a pyramidal light pipe (85-87) is located.

14. Illumination arrangement (80) according to claim 13, wherein input surfaces of said pyramidal light pipes (85-87) and the light sources (81-83) are in direct mechanical contact with each other.

15. Illumination arrangement (80) according to claim 13 or 14, wherein between the pyramidal light pipes (85-87) and the light mixing device (84) air gaps (G) are provided.

16. Illumination arrangement (40, 60, 100) according to anyone of the preceding claims, wherein said color cube (44) and/or said dichroic filter (64, 65) comprise at least two glass prisms (146, 147), respectively.

17. Illumination arrangement (40, 60, 100) according to claim 16, wherein between two of said glass prisms (146, 147) a glass plate (145) is provided, said glass plate (145) being coated with a transmissive/reflective film, wherein the surface dimensions of said glass plate (145) are bigger than the surface dimensions of surfaces of said prisms (146, 147) sandwiching said glass plate (145).
